# EUROPÄISCHE PATENTSCHRIFT

(11) **EP 0 653 432 B1**
(45) Veröffentlichungstag und Bekanntmachung des Hinweises auf die Patenterteilung: **09.02.2000**
(21) Anmeldenummer: 94117327.0
(22) Anmeldetag: 03.11.1994
(51) Int. Cl.: C07F 9/50, C07F 9/52

(54) **Verfahren zur Herstellung von Bis-(diaryl-alkyl)-phosphinen und Verbindungen aus dieser Stoffgruppe**
Process for preparing bis-(diaryl-alkyl)-phosphines and derivatives of this class of substances
Procédé de préparation de bis-(diaryl-alkyl)-phosphines et dérivés de cette classe de substances

(30) Priorität: 13.11.1993 DE 4338827; 19.09.1994 DE 4433294
(43) Veröffentlichungstag der Anmeldung: 17.05.1995
(73) Patentinhaber: Celanese Chemicals Europe GmbH, 60439 Frankfurt am Main (DE)
(72) Erfinder: Regnat, Dieter, Dr., D-60529 Frankfurt am Main (DE); Kleiner, Hans-Jerg, Dr., D-61476 Kronberg (DE)

(56) Entgegenhaltungen:
- MONATSHEFTE F R CHEMIE, Band 124, 1993, Springer Verlag Wien, New York M. WIDHALM UND C. KRATKY "8,8'-Bis(diphenylphosphino- methyl)-1,1'binaphthyl. Synthese und Konformation" Seiten 103-108
- CHEMICAL ABSTRACTS, Band 91, Nr. 9, 27. August 1979, Columbus, Ohio, USA M. KUMADA et al. "2,2'-Bis (diphenylphosphinomethyl)- 1,1'-binaphthyl and its use as a ligand for asymmetric catalysts" Seite 792, Spalte 2, Nr. 91 764v; & JP-B-79 039 059

## Beschreibung

Die vorliegende Erfindung betrifft ein Verfahren zur Herstellung von Bis-(diaryl-alkyl)-phosphinen und Verbindungen aus dieser Stoffgruppe. Verbindungen, die zwei Phosphinogruppen im Molekül enthalten (zweizähnige Phosphinliganden), spielen in einer Reihe von Verfahren, in denen ein Übergangsmetallkomplex als Katalysator Anwendung findet, eine wichtige Rolle. Siehe auch A. Miyashita et al. in Tetrahedron Lett. 34, (1993), 2351 und in J. Am. Chem. Soc. 102, (1980), 7932; R. Noyori et al., Tetrahedron 40, (1984), 1245; H. Takaya, Tetrahedron Lett. 34, (1993) 1615. Als Beispiele für derartige Verfahren seien Hydrierungs-, Hydroformylierungs- und Carbonylierungsreaktionen oder die Alkylierung und die Arylierung von Aromaten genannt.

Ein Weg zur Herstellung von Bis-(diaryl-alkyl)-phosphinen besteht darin, daß man die entsprechenden Bis-(diaryl-alkyl)-phosphinoxide reduziert. So ist es bekannt, Bis-(diarylphosphinyl-alkyl)-1,1'-binaphthyle mittels Trichlorsilan in einem Lösungsmittel zu Bis-(diarylphosphino-alkyl)-1,1'-binaphthylen zu reduzieren. Die Ausbeute liegt allerdings sehr niedrig und beträgt im Falle von 8,8'-Bis-(diphenylphospinomethyl)-1,1'-binaphthyl lediglich 30 % [M. Widhalm, C. Kratky, Monatsh. f. Chemie 124, 103 (1993)]. Die Herstellung von 2,2'-Bis-(diphenylphosphinomethyl)-1,1'-binaphthyl führt ebenfalls zu einer Ausbeute von lediglich 30 % [M. Kumada, JP 7939,059, CA 91 (1979) 91764v].

Von Nachteil ist ferner, daß die Handhabung von Trichlorsilan aufgrund der Zündtemperatur von 185 bis 200°C mit einem Gefährdungspotential verbunden ist. Zudem tritt bei der Umsetzung der Phosphinoxide mit Trichlorsilan eine Bildung von Sublimaten auf. Diese Sublimate gehen vermutlich auf Siloxane, die während der Umsetzung aus Trichlorsilan entstehen, zurück. Die Sublimate sind aber wegen der Bildung von Verlegungen und Verstopfungen in Leitungen, Stutzen und Ventilen im hohen Maße unerwünscht. Sie stellen aus diesem Grund ein erhebliches Risiko für die Betriebssicherheit des Verfahrens dar. Das nach der Umsetzung von Phosphinoxiden mit Trichlorsilan gebildete Reaktionsgemisch wird mittels sauerstofffreier 20 bis 30 %iger wäßriger Natronlauge hydrolysiert. Dabei werden die in fester Form angefallenen Siloxane aus dem Reaktionsgemisch herausgelöst und die von den Siloxanen befreite organische Phase, die die Bis-(diaryl-alkyl)-phosphine enthält, kann von der wäßrigen Phase abgetrennt werden. Die Bis-(diaryl-alkyl)-phosphine werden aus der organischen Phase nach Abdestillieren des Lösungsmittels als Rohprodukte isoliert und anschließend durch eine Kristallisation weiter gereinigt.

Es stellt daher eine lohnende Aufgabe dar, ein Verfahren, das die vorstehend geschilderten Nachteile vermeidet, zu entwickeln.
Diese Aufgabe wird gelöst durch ein Verfahren zur Herstellung von Bis-(diaryl-alkyl)-phosphinen der allgemeinen Formel 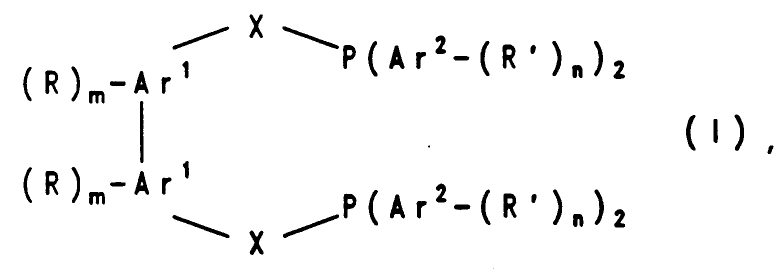 worin Ar¹ für einen Phenyl- oder Naphthylrest, Ar² für einen Phenyl- oder Naphthyl-Rest steht, R und R' unabhängig voneinander jeweils gleich oder verschieden sind und für H, einen Alkyl-, Alkoxy-, Aryloxy-Rest mit 1 bis 8 Kohlenstoffatomen, einen Dialkylamino-Rest mit 2 bis 8 Kohlenstoffatomen, F, Cl oder Br stehen, m für eine ganze Zahl von 1 bis 4, n für eine ganze Zahl von 1 bis 5 steht und X eine Alkylengruppe mit 1 bis 3 Kohlenstoffatomen bedeutet. Es ist dadurch gekennzeichnet, daß man ein Bis-(diaryl-alkyl)-phosphinoxid der allgemeinen Formel 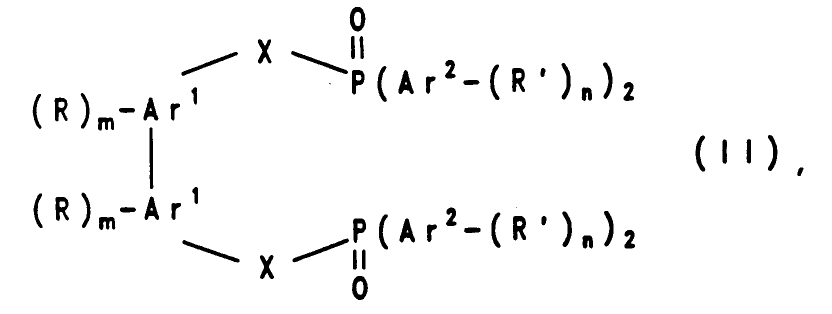 worin Ar¹, Ar², R, R', m, n und X die vorstehende Bedeutung besitzen, mit einem Organyldichlorsilan der allgemeinen Formel 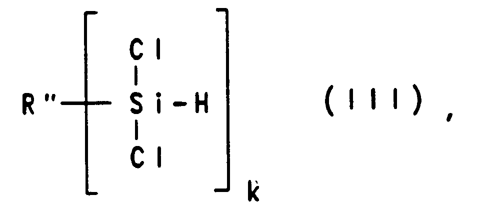 worin R'' für einen Alkyl- oder Alkylen-Rest mit 1 bis 6 Kohlenstoffatomen oder einen aromatischen Rest mit 6 bis 10 Kohlenstoffatomen und k für eine ganze Zahl von 1 bis 3 steht, in Gegenwart eines tertiären Amins mit insgesamt 6 bis 24 Kohlenstoffatomen bei 80 bis 220°C, gegebenenfalls in Anwesenheit eines Lösungsmittels, umsetzt.

Das erfindungsgemäße Verfahren weist aufgrund der höheren Zündtemperaturen von Organyldichlorsilanen ein niedrigeres Gefahrenpotential auf und erfordert einen geringeren Sicherheitsaufwand als bei der Verwendung von Trichlorsilan. So besitzt z. B. Methyldichlorsilan eine im Vergleich zu Trichlorsilan höhere Zündtemperatur von 230°C. Weiterhin ist Methyldichlorsilan an der Luft beständig, während Trichlorsilan sich an Luft entzündet.

Zudem bilden sich überraschenderweise bei der Umsetzung von Bis-(diaryl-alkyl)-phosphinoxiden der allgemeinen Formel (II) mit Organyldichlorsilanen keine Sublimate. Daher ist auch nicht zu befürchten, daß es zu unerwünschten, die Betriebssicherheit des Verfahrens gefährdenden Verstopfungen von Leitungen, Stutzen und Ventilen kommt. Darüber hinaus liefert das erfindungsgemäße Verfahren die gewünschten Wertprodukte in hohen Ausbeuten (in der Regel 80 % und mehr).

Das nach der Umsetzung anfallende Reaktionsgemisch läßt sich mittels des zuvor im Stand der Technik beschriebenen Verfahrens aufarbeiten. Es ist allerdings überraschenderweise auch möglich, auf diese aufwendige Art der Aufarbeitung zu verzichten und das Wertprodukt in einfacher Weise zu gewinnen, ohne eine Hydrolyse durchführen zu müssen.

Das erfindungsgemäße Verfahren eignet sich, wie zuvor erwähnt, zur Umsetzung von Bis-(diaryl-alkyl)-phosphinoxiden der Formel (II), insbesondere für solche, in denen Ar¹ für einen Naphthylrest und/oder Ar² für einen Phenylrest, steht.

Ohne Anspruch auf Vollständigkeit zu erheben, seien als Bis-(diaryl-alkyl)-phosphinoxide die folgenden Verbindungen genannt:
2,2'-Bis-(diphenylphosphinylmethyl)-1,1'-binaphthyl,
2,3'-Bis-(diphenylphosphinylmethyl)-1,1'-binaphthyl,
4,4'-Bis-(diphenylphosphinylmethyl)-1,1'-binaphthyl,
8,8'-Bis-(diphenylphosphinylmethyl)-1,1'-binaphthyl,
2,2'-Bis-[(bis-1-naphthylphosphinyl)methyl]-1,1'-binaphthyl,
2,2'-Bis-[2-(diphenylphosphinyl)ethyl]-1,1'-binaphthyl und
2,2'-Bis-[3-(diphenylphosphinyl)propyl]-1,1'-binaphthyl.

Gut geeignet sind als Ausgangsstoffe Bis-(diaryl-alkyl)-phosphinoxide der Formel (II), worin R und R' unabhängig voneinander jeweils gleich oder verschieden sind und für H, F, einen Alkyl-, einen Alkoxy-Rest mit jeweils 1 bis 8, insbesondere 1 bis 4 Kohlenstoffatomen, insbesondere für H, F oder einen Alkylrest, bevorzugt für H stehen. X bedeutet - wie eingangs erwähnt - eine Alkylengruppe mit 1 bis 3 Kohlenstoffatomen, insbesondere eine Methylen-, Dimethylen- oder Trimethylengruppe, bevorzugt eine Methylen- oder Dimethylengruppe.

Als Reduktionsmittel verwendet man Organyldichlorsilane der Formel (III), insbesondere solche, in denen k für 1 steht.

Als eine Auswahl geeigneter Organyldichlorsilane seien an dieser Stelle genannt:
Methyldichlorsilan, Ethyldichlorsilan, 1-Propyldichlorsilan, 2-Propyldichlorsilan, 1-Butyldichlorsilan, 1-Hexyldichlorsilan, 1,4-Butylen-bis-dichlorsilan, Phenyldichlorsilan und 1,4-Phenylen-bis-dichlorsilan.

Üblicherweise setzt man ein Organyldichlorsilan der Formel (III), worin R'' für einen Alkylrest mit 1 bis 6, insbesondere 1 bis 4 Kohlenstoffatomen oder einen gegebenenfalls substituierten Phenylrest steht, ein.
Besonders geeignete Reduktionsmittel sind Methyldichlorsilan, Ethyldichlorsilan oder Phenyldichlorsilan, insbesondere Methyldichlorsilan.

Wie zuvor erwähnt, wird die Umsetzung in Gegenwart eines tertiären Amines durchgeführt.

### Beispiele für geeignete tertiäre Amine sind

Tri-n-propylamin, Tri-iso-propylamin, n-Butyl-di-n-propylamin, Di-n-butyl-n-propylamin, Tri-n-butylamin, Tri-iso-butylamin, Di-n-butyl-ethylamin, n-Propyl-n-butyl-n-pentylamin, Di-n-propyl-n-pentylamin, Di-n-pentyl-n-propylamin, Tri-n-pentylamin, Tri-n-hexylamin.

In einer Reihe von Fällen hat es sich als günstig erwiesen, als tertiäres Amin ein Trialkylamin mit insgesamt 6 bis 24, insbesondere 9 bis 15 Kohlenstoffatomen, insbesondere Tri-n-propyl-, Tri-i-propyl-, Tri-i-butyl-, Tri-n-butyl- und/oder Tri-n-pentylamin einzusetzen.

Die Reaktionstemperatur, bei der die Umsetzung durchzuführen ist, hängt im gewissen Umfange auch von der Art und der Reaktivität der verwendeten Reaktanden ab. Häufig genügt es, die Umsetzung bei 90 bis 180°C, insbesondere 100 bis 160°C durchzuführen.

Die Umsetzung kann in Anwesenheit oder in Abwesenheit eines Lösungsmittels durchgeführt werden. Verwendet man ein Lösungsmittel, so empfiehlt es sich, als Lösungsmittel ein aprotisches Lösungsmittel einzusetzen. Geeignete aprotische Lösungsmittel sind Toluol, o-Xylol, m-Xylol, p-Xylol, technische Gemische isomerer Xylole, Mesitylen, Chlorbenzol, Dichlorbenzol, Ethylbenzol, Dioxan, Acetonitril, insbesondere Toluol, ein Xylol, technische Gemische isomerer Xylole, Mesitylen, Chlorbenzol, Ethylbenzol, bevorzugt Toluol, ein Xylol oder ein technisches Gemisch isomerer Xylole. Falls gewünscht, lassen sich auch Mischungen dieser Lösungsmittel verwenden.

Üblicherweise setzt man das Bis-(diaryl-alkyl)-phosphinoxid und das Organyldichlorsilan im Molverhältnis 1:2 bis 1:10, insbesondere 1:4 bis 1:6 ein.

Im allgemeinen setzt man das Organyldichlorsilan und das tertiäre Amin im Molverhältnis 1:0,5 bis 1:1,5, insbesondere 1:1 bis 1:1,2 ein.

Die Umsetzung läßt sich sowohl bei Normaldruck als auch bei Überdruck, insbesondere bei dem sich jeweils einstellenden Reaktionsdruck, durchführen.

Wie zuvor angedeutet, ist es möglich, die im Stande der Technik beschriebene aufwendige Aufarbeitung zu vermeiden und das gewünschte Wertprodukt auf einfache Art aus dem Reaktionsgemisch zu gewinnen. Hierzu destilliert man aus dem nach der Umsetzung anfallenden Reaktionsgemisch das Lösungsmittel direkt ab und läßt das Bis-(diaryl-alkyl)-phosphin aus dem verbleibenden, in dem tertiären Amin gelösten Reaktionsgemisch auskristallisieren. Will man diese Verfahrensvariante durchführen, so empfiehlt es sich, ein tertiäres Amin zu wählen, dessen Siedepunkt deutlich höher als der des verwendeten Lösungsmittels liegt. Bei der Verwendung von Toluol, Xylol oder Ethylbenzol hat sich Tri-n-butylamin als besonders brauchbares tertiäres Amin erwiesen.

Das erfindungsgemäße Verfahren macht durch Umsetzung entsprechender 2,2'-Bis(diphenylphosphinylmethyl)-1,1-binaphthyle (Phosphinoxide der Formel (II), worin (R)ₘ-Ar¹-Ar¹-(R)ₘ für einen 1,1'-Binaphthylrest steht) mit einem Organylsilan der Formel (III) Verbindungen der Formel (Ia) 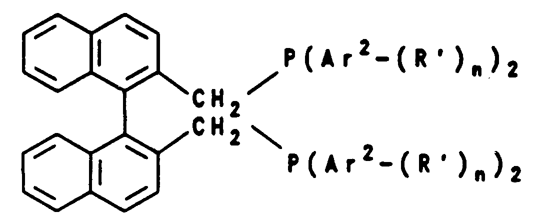 worin Ar² für einen Phenylrest, R' für einen Alkylrest mit 1 bis 6 Kohlenstoffatomen, CF₃, Fluor, Chlor oder Brom, insbesondere für Methyl, CF₃ oder Fluor, und n für 1 oder 2 steht, auf überraschend einfache Art zugänglich.

Als Verbindungen, die hierunter fallen, sind besonders die Verbindungen 2,2'-Bis-[-bis-(2-fluorphenyl)phosphinomethyl-1,1'-binaphthyl, 2,2'-Bis-[bis-(3-fluorphenyl)phosphinomethyl]-1,1'-binaphthyl, 2,2'-Bis-[bis-(4-fluorphenyl)phosphinomethyl]-1,1'-binaphthyl, 2,2'-Bis-[bis-(2-methylphenyl)phosphinomethyl]-1,1'-binaphthyl, 2,2'-Bis-[bis-(4-methylphenyl)phosphinomethyl]-1,1'-binaphthyl, 2,2'-Bis-[bis-(2-trfluormethylphenyl)phosphinomethyl]-1,1'-binaphthyl, 2,2'-Bis-[bis-(4-trifluormethylphenyl)phosphinomethyl]-1,1'-binaphthyl, 2,2'-Bis-[bis-(2,3-difluorphenyl)phosphinomethyl]-1,1'-binaphthyl, 2,2'-Bis-[bis-(2,4-difluorphenyl)phosphinomethyl]-1,1'-binaphthyl, 2,2'-Bis-[3,5-difluorphenyl)phosphinomethyl]-1,1'-binaphthyl zu erwähnen.

Die nachfolgenden Beispiele belegen die Erfindung, ohne sie zu beschränken.

### Experimenteller Teil

Beispiel 1:
   Verfahren zur Herstellung von 2,2'-Bis-(diphenylphosphinomethyl)-1,1'-binaphthyl unter Einsatz von Methyldichlorsilan:
   Unter Luft- und Feuchtigkeitsausschluß werden 409,7 g (0,6 mol) 2,2'-Bis-(diphenylphosphinylmethyl)-1,1'-binaphthyl in 1,5 l Xylol und 715 ml (3,0 mol) Tri-n-butylamin suspendiert und unter Rühren 345,1 g (3,0 mol) Methyldichlorsilan zugetropft. Anschließend erhitzt man 12 Stunden zum Rückfluß, wobei sich eine klare Lösung bildet. Man destilliert Xylol bei Normaldruck ab und läßt unter Rühren abkühlen. Dabei bildet sich 2,2'-Bis-(diphenylphosphinomethyl)-1,1'-binaphthyl als ein farbloser Feststoff, der unter Inertgas abfiltriert und mit 200 ml entgastem Aceton gewaschen wird. Man erhält 378 g (97 %) farblose Kristalle mit Schmp. 160 bis 161°C.
Beispiel 2:
   Verfahren zur Herstellung von 2,2'-Bis-(diphenylphosphinomethyl)-1,1'-binaphthyl unter Einsatz von Ethyldichlorsilan:
   Unter Luft- und Feuchtigkeitsausschluß werden 20,48 g (0,03 mol) 2,2'-Bis-(diphenylphosphinylmethyl)-1,1'-binaphthyl in 80 ml Xylol und 39,3 ml (0,165 mol) Tri-n-butylamin suspendiert und unter Rühren 19,4 g (0,15 mol) Ethyldichlorsilan zugetropft. Anschließend erhitzt man 13 Stunden zum Rückfluß, wobei sich eine klare Lösung bildet. Man destilliert Xylol bei Normaldruck ab und läßt unter Rühren abkühlen. Dabei bildet sich 2,2'-Bis-(diphenylphosphinomethyl)-1,1'-binaphthyl als ein farbloser Feststoff, der unter Inertgas abfiltriert und mit 20 ml entgastem Aceton gewaschen wird. Man erhält 18,5 g (95 %) farblose Kristalle mit Schmp. 160 bis 161°C.
Beispiel 3:
   Verfahren zur Herstellung von 2,2'-Bis-(diphenylphosphinomethyl)-1,1'-binaphthyl unter Einsatz von Phenyldichlorsilan:
   Unter Luft- und Feuchtigkeitsausschluß werden 20,48 g (0,03 mol) 2,2'-Bis-(diphenylphosphinylmethyl)-1,1'-binaphthyl in 80 ml Xylol und 30,6 g (0,165 mol) Tri-n-butylamin suspendiert und unter Rühren 26,57 g (0,15 mol) Phenyldichlorsilan zugetropft. Anschließend erhitzt man 13 Stunden zum Rückfluß, wobei sich eine klare Lösung bildet. Man destilliert Xylol bei Normaldruck ab und läßt unter Rühren abkühlen. Dabei bildet sich 2,2'-Bis-(diphenylphosphinomethyl)-1,1'-binaphthyl als ein farbloser Feststoff, der unter Inertgas abfiltriert und mit 20 ml entgastem Aceton gewaschen wird. Man erhält 18,5 g (95 %) farblose Kristalle mit Schmp. 160 bis 161°C.
Beispiel 4:
   Verfahren zur Herstellung von 8,8'-Bis-(diphenylphosphinomethyl)-1,1'-binaphthyl unter Einsatz von Methyldichlorsilan:
   Unter Luft- und Feuchtigkeitsausschluß werden 20,48 g (0,03 mol) 8,8'-Bis-(diphenylphosphinylmethyl)-1,1'-binaphthyl in 75 ml Xylol und 36 ml (0,15 mol) Tri-n-butylamin suspendiert und unter Rühren 16,57 g (0,144 mol) Methyldichlorsilan zugetropft. Anschließend erhitzt man 14 Stunden zum Rückfluß, wobei sich eine klare Lösung bildet. Man destilliert Xylol bei Normaldruck ab und läßt unter Rühren abkühlen. Dabei bildet sich 8,8'-Bis-(diphenylphosphinomethyl)-1,1'-binaphthyl als ein farbloser Feststoff, der unter Inertgas abfiltriert und mit 20 ml entgastem Aceton gewaschen wird. Man erhält 16,7 g (87 %) farblose Kristalle mit Schmp. 168 bis 170°C.
Beispiel 5:
   Herstellung von 2,2'-Bis-[bis-(3-fluorphenyl)phosphinomethyl]-1,1'-binaphthyl unter Einsatz von Phenyldichlorsilan:
   Unter Luft- und Feuchtigkeitsausschluß werden 7,6 g (0.01 mol) 2,2'-Bis-[bis(3-fluorphenyl)phosphinylmethyl)]-1,1'-binaphthyl in 50 ml o-Xylol und 8,4 ml (33 mmol) Tributylamin suspendiert und unter Rühren 5,3 g (30 mmol) Phenyldichlorsilan zugetropft. Anschließend erhitzt man 5 Stunden zum Rückfluß, wobei sich eine klare Lösung bildet. Man destilliert o-Xylol bei Normaldruck ab und läßt unter Rühren abkühlen. Dabei bildet sich ein farbloser Feststoff der unter Inertgas abfiltriert und mit 20 ml entgastem Aceton gewaschen wird. Man erhält 5,7 g (79 %) farblose Kristalle.
   Schmelzpunkt: 143 bis 144°C
   ³¹P-NMR: δ (CDCl₃) = -11,6 ppm
Beispiel 6
   Herstellung von 2,2'-Bis-[bis-(4-fluorphenyl)phosphinomethyl]-1,1'-binaphthyl unter Einsatz von Phenyldichlorsilan:
   Unter Luft- und Feuchtigkeitsausschluß werden 7,6 g (0,01 mol) 2,2'-Bis-[bis-(4-fluorphenyl)phosphinylmethyl)]-1,1'-binaphthyl in 50 ml o-Xylol und 8,4 ml (33 mmol) Tributylamin suspendiert und unter Rühren 5,3 g (30 mmol) Phenyldichlorsilan zugetropft. Anschließend erhitzt man 5 Stunden zum Rückfluß, wobei sich eine klare Lösung bildet. Man destilliert o-Xylol bei Normaldruck ab und läßt unter Rühren abkühlen. Dabei bildet sich ein farbloser Feststoff der unter Inertgas abfiltriert und mit 20 ml entgastem Aceton gewaschen wird. Man erhält 5,9 g (82 %) farblose Kristalle.
   ³¹P-NMR: δ (CDCl₃) = -14,4 ppm
Beispiel 7
   Herstellung von 2,2'-Bis-[bis-(2-methylphenyl)phosphinomethyl]-1,1'-binapthyl unter Einsatz von Phenyldichlorsilan:
   Unter Luft- und Feuchtigkeitsausschluß werden 18,0 g (0,0244 mol) 2,2'-Bis-[bis(2-methylphenyl)phosphinylmethyl)]-1,1'-binaphthyl in 150 ml o-Xylol und 21,7 ml (85 mmol) Tributylamin suspendiert und unter Rühren 13,3 g (73 mmol) Phenyldichlorsilan zugetropft. Anschließend erhitzt man 24 Stunden zum Rückfluß, wobei sich eine klare Lösung bildet. Man destilliert o-Xylol bei Normaldruck ab und läßt unter Rühren abkühlen. Dabei bildet sich ein farbloser Feststoff, der unter Inertgas abfiltriert und mit 20 ml entgastem Aceton gewaschen wird. Man erhält 12,6 g (73 %) farblose Kristalle.
   Schmelzpunkt: 105 bis 107°C
   ³¹P-NMR: δ (CDCl₃) = -35,6 ppm

## Patentansprüche

1. Verfahren zur Herstellung von Bis-(diaryl-alkyl)-phosphinen der allgemeinen Formel 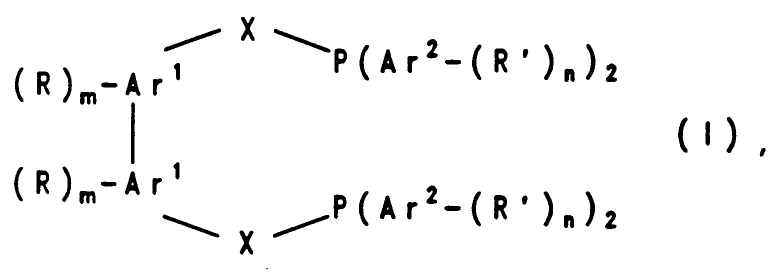 worin Ar¹ für einen Phenyl- oder Naphthylrest, Ar² für einen Phenyl- oder Naphthyl-Rest steht, R und R' unabhängig voneinander jeweils gleich oder verschieden sind und für H, einen Alkyl-, Alkoxy-, Aryloxy-Rest mit 1 bis 8 Kohlenstoffatomen, einen Dialkylamino-Rest mit 2 bis 8 Kohlenstoffatomen, F, Cl oder Br stehen, m für eine ganze Zahl von 1 bis 4, n für eine ganze Zahl von 1 bis 5 steht und X eine Alkylengruppe mit 1 bis 3 Kohlenstoffatomen bedeutet, dadurch gekennzeichnet, daß man ein Bis-diaryl-alkyl-phosphinoxid der allgemeinen Formel 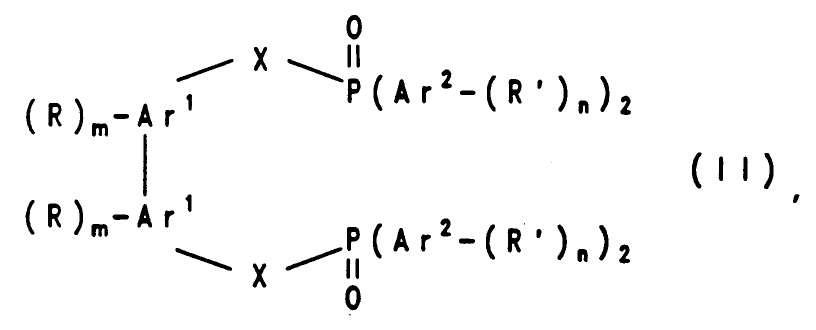 worin Ar¹, Ar², R, R', m, n und X die vorstehende Bedeutung besitzen, mit einem Organyldichlorsilan der allgemeinen Formel 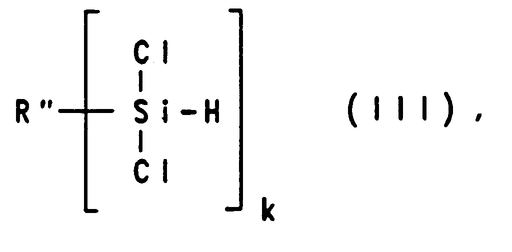 worin R'' für einen Alkyl- oder Alkylen-Rest mit 1 bis 6 Kohlenstoffatomen oder einen aromatischen Rest mit 6 bis 10 Kohlenstoffatomen und k für eine ganze Zahl von 1 bis 3 steht, in Gegenwart eines tertiären Amins mit insgesamt 6 bis 24 Kohlenstoffatomen bei 80 bis 220°C, gegebenenfalls in Anwesenheit eines Lösungsmittels, umsetzt.

2. Verfahren nach Anspruch 1, dadurch gekennzeichnet, daß man ein Bis-(diaryl-alkyl)-phosphinoxid der Formel (II), worin Ar¹ für einen gegebenenfalls substituierten Naphthyl-Rest steht, einsetzt.

3. Verfahren nach Anspruch 1 oder 2, dadurch gekennzeichnet, daß man ein Bis-(diaryl-alkyl)-phosphinoxid der Formel (II), worin R und R' unabhängig voneinander jeweils gleich oder verschieden sind und für H, F, einen Alkyl-oder einen Alkoxy-Rest mit jeweils 1 bis 8, insbesondere 1 bis 4 Kohlenstoffatomen, stehen, einsetzt.

4. Verfahren nach einem oder mehreren der Ansprüche 1 bis 3, dadurch gekennzeichnet, daß man ein Bis-(diaryl-alkyl)-phosphinoxid der Formel (II), worin R und R' unabhängig voneinander jeweils gleich oder verschieden sind und für H, F oder einen Alkylrest, insbesondere H stehen, einsetzt.

5. Verfahren nach einem oder mehreren der Ansprüche 1 bis 4, dadurch gekennzeichnet, daß man ein Organyldichlorsilan der Formel (III), worin R'' für einen Alkyl-Rest mit 1 bis 6, insbesondere 1 bis 4 Kohlenstoffatomen oder einen Phenylrest steht, einsetzt.

6. Verfahren nach einem oder mehreren der Ansprüche 1 bis 5, dadurch gekennzeichnet, daß man als Organyldichlorsilan Methyldichlorsilan, Ethyldichlorsilan oder Phenyldichlorsilan einsetzt.

7. Verfahren nach einem oder mehreren der Ansprüche 1 bis 6, dadurch gekennzeichnet, daß man als tertiäres Amin ein Trialkylamin mit insgesamt 6 bis 24, insbesondere 9 bis 15 Kohlenstoffatomen, einsetzt.

8. Verfahren nach einem oder mehreren der Ansprüche 1 bis 7, dadurch gekennzeichnet, daß man als tertiäres Amin Tri-n-propyl-, Tri-i-propyl-, Tri-i-butyl-, Tri-n-butyl-, Tri-n-pentylamin einsetzt.

9. Verfahren nach einem oder mehreren der Ansprüche 1 bis 8, dadurch gekennzeichnet, daß man die Umsetzung bei 90 bis 180, insbesondere 100 bis 160°C durchführt.

10. Verfahren nach einem oder mehreren der Ansprüche 1 bis 9, dadurch gekennzeichnet, daß man als Lösungsmittel ein aprotisches Lösungsmittel einsetzt.

11. Verfahren nach einem oder mehreren der Ansprüche 1 bis 10, dadurch gekennzeichnet, daß man als Lösungsmittel Toluol, Xylol, Mesitylen, Chlorbenzol, Dichlorbenzol, Ethylbenzol, Dioxan, Acetonitril, insbesondere Xylol, Mesitylen, Chlorbenzol und/oder Ethylbenzol einsetzt.

12. Verfahren nach einem oder mehreren der Ansprüche 1 bis 11, dadurch gekennzeichnet, daß man Bis-(diaryl-alkyl)-phosphinoxid und Organyldichlorsilan im Molverhältnis 1:2 bis 1:10, insbesondere 1:4 bis 1:6 einsetzt.

13. Verfahren nach einem oder mehreren der Ansprüche 1 bis 12, dadurch gekennzeichnet, daß man Organyldichlorsilan und tertiäres Amin im Molverhältnis 1:0,5 bis 1:1,5, insbesondere 1:1 bis 1:1,2 einsetzt.

14. Verfahren nach einem oder mehreren der Ansprüche 1 bis 13, dadurch gekennzeichnet, daß man die Umsetzung bei Normaldruck oder Überdruck durchführt.

15. Verfahren nach einem oder mehreren der Ansprüche 1 bis 14, dadurch gekennzeichnet, daß man nach der Umsetzung das Lösungsmittel abdestilliert und das Bis-(diaryl-alkyl)-phosphin aus dem verbleibenden, in dem tertiären Amin gelösten Reaktionsgemisch auskristallisieren läßt.

16. Verbindungen der Formel 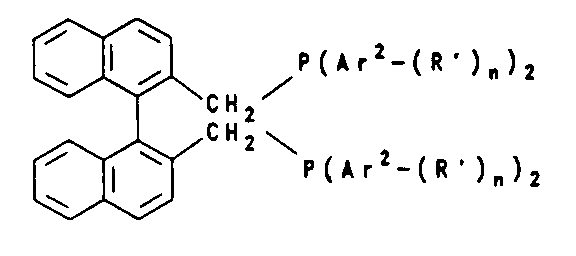 worin Ar² für einen Phenylrest, R' für einen Alkylrest mit 1 bis 4 Kohlenstoffatomen, CF₃, Fluor, Chlor oder Brom und n für 1 oder 2 steht.

17. Verbindungen nach Anspruch 16 der Formel 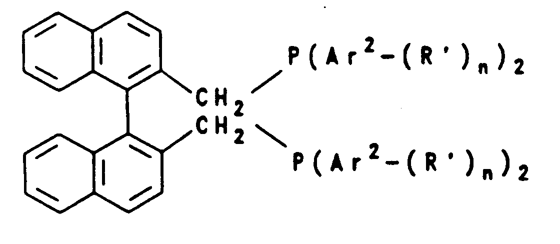 worin Ar² für Phenyl, R' für Methyl, CF₃ oder Fluor und n für 1 oder 2 steht.

18. Die Verbindungen 2,2'-Bis-[bis-(2-fluorphenyl)phosphinomethyl-1,1'-binaphthyl, 2,2'-Bis-[bis-(3-fluorphenyl)phosphinomethyl]-1,1'-binaphthyl, 2,2,-Bis-[bis-(4-fluorphenyl)phosphinomethyl]-1,1'-binaphthyl, 2,2'-Bis-[bis-(2-methylphenyl)phosphinomethyl]-1,1'-binaphthyl, 2,2'-Bis-[bis-(4-methylphenyl)phosphinomethyl]-1,1'-binaphthyl, 2,2'-Bis-[bis-(2-trifluormethylphenyl)phosphinomethyl]-1,1'-binaphthyl, 2,2'-Bis-[bis-(4-trifluormethylphenyl]phosphinomethyl]-1,1-binaphthyl, 2,2'-Bis-[bis-(2,3-difluorphenyl)phosphinomethyl]-1,1'-binaphthyl, 2,2'-Bis-[bis-(2,4-difluorphenyl)phosphinomethyl]-1,1'-binaphthyl und 2,2'-Bis-[bis-(3,5-difluorphenyl)phosphinomethyl]-1,1'-binaphthyl nach Anspruch 16.

## Claims

1. A process for preparing bis(diarylalkyl)phosphines of the formula 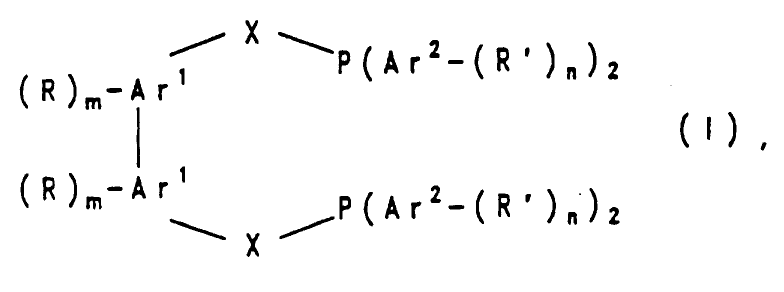 in which Ar¹ is a phenyl or naphthyl radical, Ar² is a phenyl or naphthyl radical, R and R' are in each case, independently of one another, identical or different and are H, an alkyl, alkoxy, aryloxy radical having 1 to 8 carbon atoms, a dialkylamino radical having 2 to 8 carbon atoms, F, Cl or Br, m is an integer from 1 to 4, n is an integer from 1 to 5, and X is an alkylene group having 1 to 3 carbon atoms, which process comprises reacting a bis(diarylalkyl)phosphine oxide of the formula 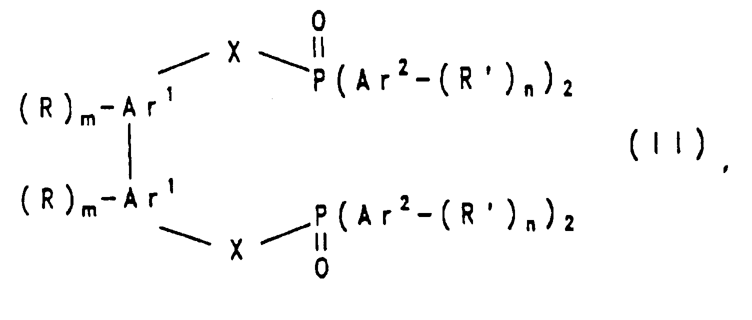 in which Ar¹, Ar², R, R', m, n and X have the above meaning, with an organodichlorosilane of the formula 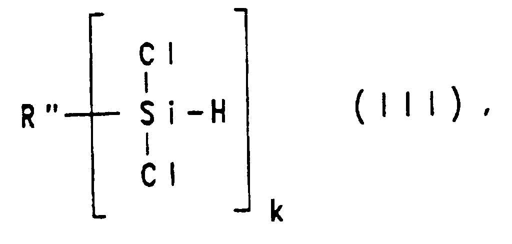 in which R'' is an alkyl or alkylene radical having 1 to 6 carbon atoms or an aromatic radical having 6 to 10 carbon atoms and k is an integer from 1 to 3, in the presence of a tertiary amine having a total of 6 to 24 carbon atoms at 80 to 220°C, if desired in the presence of a solvent.

2. The process as claimed in claim 1, wherein a bis(diarylalkyl)phosphine oxide of the formula (II) in which Ar¹ is a substituted or unsubstituted naphthyl radical is used.

3. The process as claimed in claim 1 or 2, wherein a bis(diarylalkyl)phosphine oxide of the formula (II) in which R and R' are in each case, independently of one another, identical or different and are H, F, an alkyl or an alkoxy radical, each having 1 to 8, in particular 1 to 4, carbon atoms, is used.

4. The process as claimed in one or more of claims 1 to 3, wherein a bis(diarylalkyl)phosphine oxide of the formula (II) in which R and R' are in each case, independently of one another, identical or different and are H, F or an alkyl radical, in particular H, is used.

5. The process as claimed in one or more of claims 1 to 4, wherein an organodichlorosilane of the formula (III) in which R'' is an alkyl radical having 1 to 6, in particular 1 to 4, carbon atoms or is a phenyl radical is used.

6. The process as claimed in one or more of claims 1 to 5, wherein the organodichlorosilane used is methyldichlorosilane, ethyldichlorosilane or phenyldichlorosilane.

7. The process as claimed in one or more of claims 1 to 6, wherein the tertiary amine used is a trialkylamine having a total of 6 to 24, in particular 9 to 15, carbon atoms.

8. The process as claimed in one or more of claims 1 to 7, wherein the tertiary amine used is tri-n-propyl-, tri-i-propyl-, tri-i-butyl-, tri-n-butyl-, tri-n-pentylamine.

9. The process as claimed in one or more of claims 1 to 8, wherein the reaction is carried out at 90 to 180, in particular 100 to 160, °C.

10. The process as claimed in one or more of claims 1 to 9, wherein the solvent used is an aprotic solvent.

11. The process as claimed in one or more of claims 1 to 10, wherein the solvent used is toluene, xylene, mesitylene, chlorobenzene, dichlorobenzene, ethylbenzene, dioxane, acetonitrile, in particular xylene, mesitylene, chlorobenzene and/or ethylbenzene.

12. The process as claimed in one or more of claims 1 to 11, wherein bis(diarylalkyl)phosphine oxide and organodichlorosilane are used in a molar ratio of 1:2 to 1:10, in particular 1:4 to 1:6.

13. The process as claimed in one or more of claims 1 to 12, wherein organodichlorosilane and tertiary amine are used in a molar ratio of 1:0.5 to 1:1.5, in particular 1:1 to 1:1.2.

14. The process as claimed in one or more of claims 1 to 13, wherein the reaction is carried out at atmospheric pressure or superatmospheric pressure.

15. The process as claimed in one or more of claims 1 to 14, wherein the reaction is followed by distilling off the solvent and allowing the bis(diarylalkyl)phosphine to crystallize from the remaining reaction mixture dissolved in the tertiary amine.

16. A compound of the formula 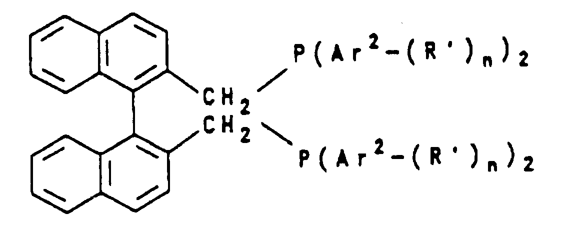 in which Ar² is a phenyl radical, R' is an alkyl radical having 1 to 4 carbon atoms, CF₃, fluorine, chlorine or bromine, and n is 1 or 2.

17. A compound according to claim 16 of the formula 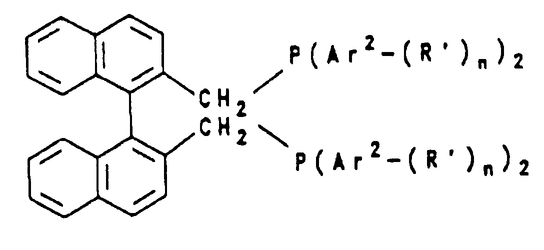 in which Ar² is phenyl, R' is methyl, CF₃ or fluorine, and n is 1 or 2.

18. The compounds 2,2'-bis[bis(2-fluorophenyl)phosphinomethyl]-1,1'-binaphthyl, 2,2'-bis[bis(3-fluorophenyl)phosphinomethyl]-1,1'-binaphthyl, 2,2'-bis[bis(4-fluorophenyl)phosphinomethyl]-1,1'-binaphthyl, 2,2'-bis[bis(2-methylphenyl)phosphinomethyl]-1,1'-binaphthyl, 2,2'-bis[bis(4-methylphenyl)phosphinomethyl]-1,1'-binaphthyl, 2,2'-bis[bis(2-trifluoromethylphenyl)phosphinomethyl]-1,1'-binaphthyl, 2,2'-bis[bis(4-trifluoromethylphenyl)phosphinomethyl]-1,1'-binaphthyl, 2,2'-bis[bis(2,3-difluorophenyl)phosphinomethyl]-1,1'-binaphthyl, 2,2'-bis[bis(2,4-difluorophenyl)phosphinomethyl]-1,1'-binaphthyl and 2,2'-bis[bis(3,5-difluorophenyl)-phosphinomethyl]-1,1'-binaphthyl according to claim 16.

## Revendications

1. Procédé de préparation de bis(diaryl-alkyl)phosphines de formule générale 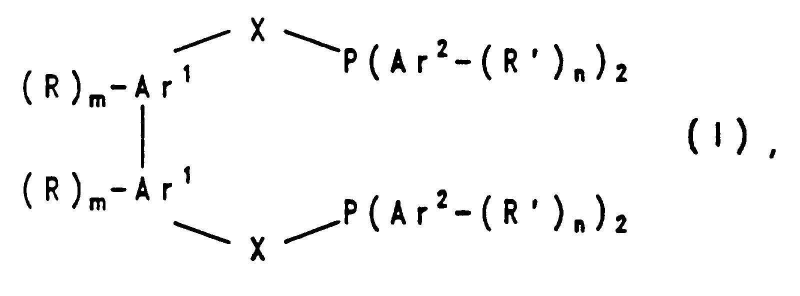 dans laquelle Ar¹ représente un reste phényle ou naphtyle, Ar² représente un reste phényle ou naphtyle, R et R' sont identiques ou différents et représentent chacun, indépendamment l'un de l'autre, H, un reste alkyle, alcoxy ou aryloxy de 1 à 8 atomes de carbone, un reste dialkylamino de 2 à 8 atomes de carbone, F, Cl ou Br, m est un nombre entier de 1 à 4, n est un nombre entier de 1 à 5 et X représente un groupe alkylène de 1 à 3 atomes de carbone, caractérisé en ce que l'on fait réagir un oxyde de bis(diaryl-alkyl)phosphine de formule générale 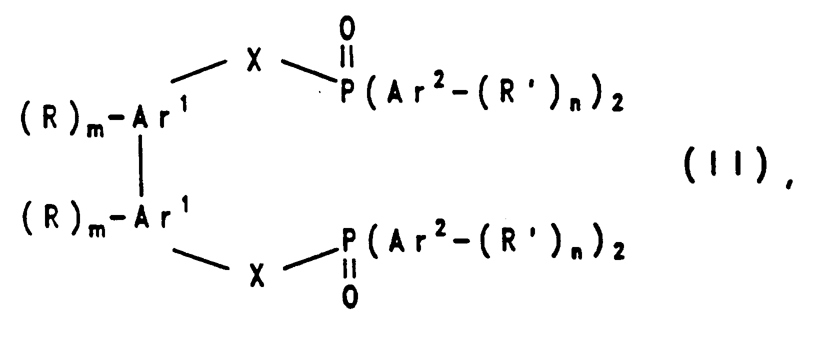 dans laquelle Ar¹, Ar², R, R', m, n et X ont la définition indiquée précédemment, avec un organyldichlorosilane de formule générale 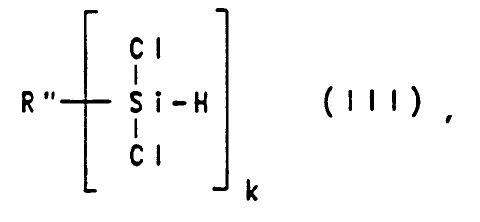 dans laquelle R'' est un reste alkyle ou alkylène de 1 à 6 atomes de carbone ou un reste aromatique de 6 à 10 atomes de carbone, et k est un nombre entier de 1 à 3, en présence d'une amine tertiaire ayant en tout 6 à 24 atomes de carbone, à une température de 80 à 220°C, éventuellement en présence d'un solvant.

2. Procédé selon la revendication 1, caractérisé en ce que l'on utilise un oxyde de bis(diaryl-alkyl)phosphine de formule (II) dans laquelle Ar¹ représente un reste naphtyle éventuellement substitué.

3. Procédé selon la revendication 1 ou 2, caractérisé en ce que l'on utilise un oxyde de bis(diaryl-alkyl)phosphine de formule (II) dans laquelle R et R' sont identiques ou différents et représentent chacun, indépendamment l'un de l'autre, H, F, un reste alkyle ou alcoxy de 1 à 8, en particulier 1 à 4 atomes de carbone.

4. Procédé selon l'une ou plusieurs des revendications 1 à 3, caractérisé en ce que l'on utilise un oxyde de bis(diaryl-alkyl)phosphine de formule (II) dans laquelle R et R' sont identiques ou différents et représentent chacun, indépendamment l'un de l'autre, H, F ou un reste alkyle, en particulier H.

5. Procédé selon l'une ou plusieurs des revendications 1 à 4, caractérisé en ce que l'on utilise un organyldichlorosilane de formule (III) dans laquelle R'' est un reste alkyle de 1 à 6, en particulier 1 à 4 atomes de carbone, ou un reste phényle.

6. Procédé selon l'une ou plusieurs des revendications 1 à 5, caractérisé en ce que en ce que l'on utilise comme organyldichlorosilane du méthyldichlorosilane, de l'éthyldichlorosilane ou du phényldichlorosilane.

7. Procédé selon l'une ou plusieurs des revendications 1 à 6, caractérisé en ce que l'on utilise comme amine tertiaire une trialkylamine ayant en tout 6 à 24, en particulier 9 à 15 atomes de carbone.

8. Procédé selon l'une ou plusieurs des revendications 1 à 7, caractérisé en ce que l'on utilise comme amine tertiaire la tri-n-propylamine, la tri-isopropylamine, la tri-isobutylamine, la tri-n-butylamine, la tri-n-pentylamine.

9. Procédé selon l'une ou plusieurs des revendications 1 à 8, caractérisé en ce que l'on effectue la réaction à une température de 80 à 180°C, en particulier de 100 à 160°C.

10. Procédé selon l'une ou plusieurs des revendications 1 à 9, caractérisé en ce que l'on utilise comme solvant un solvant aprotique.

11. Procédé selon l'une ou plusieurs des revendications 1 à 10, caractérisé en ce que l'on utilise comme solvant le toluène, un xylène, le mésitylène, le chlorobenzène, un dichlorobenzène, l'éthylbenzène, le dioxane, l'acétonitrile, en particulier un xylène, le mésitylène, le chlorobenzène et/ou l'éthylbenzène.

12. Procédé selon l'une ou plusieurs des revendications 1 à 11, caractérisé en ce que l'on utilise l'oxyde de bis(dialkyl-aryl)phosphine et l'organyldichlorosilane en un rapport molaire de 1 : 2 à 1 : 10, en particulier de 1 : 4 à 1 : 6.

13. Procédé selon l'une ou plusieurs des revendications 1 à 12, caractérisé en ce que l'on utilise l'organyldichlorosilane et l'amine tertiaire en un rapport molaire de 1 : 0,5 à 1 : 1,5, en particulier de 1 : 1 à 1 : 1,2.

14. Procédé selon l'une ou plusieurs des revendications 1 à 13, caractérisé en ce que l'on effectue la réaction sous la pression normale ou sous une surpression.

15. Procédé selon l'une ou plusieurs des revendications 1 à 14, caractérisé en ce que, après la réaction, on sépare le solvant par distillation et on laisse cristalliser la bis(diaryl-alkyl)phosphine dans le mélange réactionnel restant, dissous dans l'amine tertiaire.

16. Composés de formule 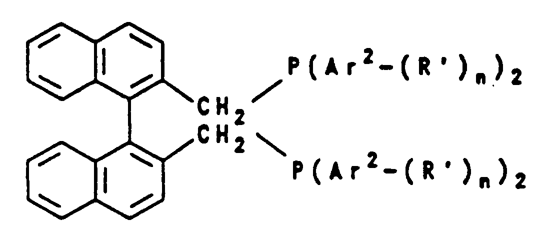 dans laquelle Ar² est un reste phényle, R' est un reste alkyle de 1 à 4 atomes de carbone, CF₃, le fluor, le chlore ou le brome et n est 1 ou 2.

17. Composés selon la revendication 16, de formule 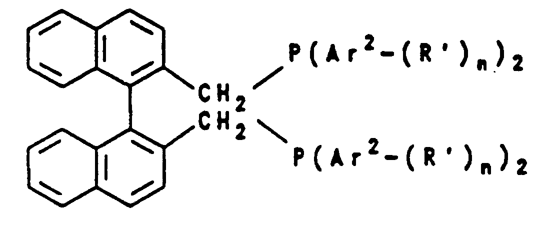 dans laquelle Ar² est un reste phényle, R' est un reste méthyle, CF₃ ou le fluor et n est 1 ou 2.

18. Composés selon la revendication 16, qui sont le 2,2'-bis[bis(2-fluorophényl)phosphinométhyl]-1,1'-binaphtyle, le 2,2'-bis[bis(3-fluorophényl)phosphinométhyl]-1,1'-binaphtyle, le 2,2'-bis[bis(4-fluorophényl)phosphinométhyl]-1,1'-binaphtyle, le 2,2'-bis[bis(2-méthylphényl)phosphinométhyl]-1,1'-binaphtyle, le 2,2'-bis[bis(4-méthylphényl)phosphinométhyl]-1,1'-binaphtyle, le 2,2'-bis[bis(2-trifluorométhylphényl)phosphinométhyl]-1,1'-binaphtyle, le 2,2'-bis[bis(4-trifluorométhylphényl)phosphinométhyl]-1,1-binaphtyle, le 2,2'-bis[bis(2,3-difluorophényl)phosphinométhyl]-1,1'-binaphtyle, le 2,2'-bis[bis(2,4-difluorophényl) phosphinométhyl]-1,1'-binaphtyle, et le 2,2'-bis(3,5-difluorophényl)phosphinométhyl]-1,1'-binaphtyle.
